**Europäisches Patentamt**

(19) **European Patent Office** (11) Numéro de publication: **0 122 837**

**Office européen des brevets** **B1**

# FASCICULE DE BREVET EUROPÉEN

(45) Date de publication du fascicule du brevet: (51) Int. Cl.⁴: **H 04 N 11/04**
10.06.87

(21) Numéro de dépôt: **84400605.6**

(22) Date de dépôt: **26.03.84**

(54) Procédé de codage par compression d'un signal numérique vidéo en couleur.

(30) Priorité: **13.04.83 FR 8306025**

(43) Date de publication de la demande:
**24.10.84 Bulletin 84/43**

(45) Mention de la délivrance du brevet:
**10.06.87 Bulletin 87/24**

(84) Etats contractants désignés:
**BE CH DE GB IT LI NL SE**

(56) Documents cité:
**WO-A-82/00396**
**FR-A-2 085 256**

**IEEE TRANSACTIONS ON COMMUNICATIONS,
vol. COM-25, no. 11, novembre 1977, pages 1393-
1406, New York, USA; L. STENGER: "Quantization
of TV chrominance signals considering the
visibility of small color differences"
NACHRICHTENTECHNISCHE ZEITSCHRIFT N.T.Z.,
vol. 27, no. 5, 1974, pages 176-181, Berlin, DE; F.J. IN
DER SMITTEN: "Informationsreduzierende
Quellencodierung von Farbbildsignalen auf der
Basis optischer Valenzklassen"**

(73) Titulaire: **Guichard, Jacques, 8/10 rue des
Morillons, F-75015 Paris (FR)**

(72) Inventeur: **Guichard, Jacques, 8/10 rue des
Morillons, F-75015 Paris (FR)**

(74) Mandataire: **Martinet & Lapoux, 62, rue des
Mathurins, F-75008 Paris (FR)**

LIBER, STOCKHOLM 1987

## Description

La présente invention concerne un procédé de codage par compression d'un signal numérique vidéo en couleur. Plus particulièrement, le codage a trait à la compression de débit des deux signaux numériques de différence de couleur composant le signal vidéo.

On notera dès maintenant que l'invention ne concerne pas les procédés de codage par modulation par impulsions codées en différentiel (MICD) qui sont actuellement employés et qui font appel à une prédiction intraimage ou inter-image.

Le but de l'invention est de transmettre des mots numériques à débit faible qui sont représentatifs de points de l'image tramsmise et qui sont sélectionnés en fonction des intervalles de variation réels des signaux de différence de couleur dont les limites dépendent de la relation linéaire les liant avec le signal de luminance.

A cette fin, l'objet de l'invention est de fournir un procédé de codage d'un signal numérique de luminance et de deux signaux numériques de différence de couleur ayant des débits élevés et constitués de premiers mots représentatifs de points d'une image en couleur, en des signaux numériques codés de luminance et de différence de couleur ayant des débits faibles et constitués de seconds mots, caractérisé en ce que l'amplitude crête à crête de la luminance est partagée en zones de luminance qui sont chacune associée à deux tableaux de seconds mots de deux signaux codés respectivement représentatifs de sous-intervalles de variation prédéterminés des deux différences de couleur pour des luminances comprises dans ladite zone de luminance, et en ce que les premiers mots des deux signaux de différence de couleur représentatifs d'un point d'image sont codés en deux seconds mots qui sont choisis dans les deux tableaux respectifs associés à la zone de luminance incluant la luminance dudit point d'image et qui sont représentatifs des deux sous-intervalles dans la zone de luminance incluant respectivement les deux differences de couleur dudit point.

Selon un premier procédé, le nombre de bits dans les seconds mots alloués aux signaux de différence de couleur codés est constant et la loi de quantification propre au codage des signaux de différence de couleur est variable et différente entre les zones de luminance.

Selon un second procédé, la loi de quantification propre au codage des signaux de différence de couleur est constante et le nombre de bits dans les seconds mots est variable et différent entre les zones luminance.

Selon une seconde réalisation des procédés, chaque zone de luminance est associée à un tableau de seconds mots d'un signal codé représentatif de sous-zones de variation prédéterminées des deux différences de couleur pour des luminances comprises dans ladite zone de luminance. Les deux premiers mots des deux signaux de différence de couleur représentatifs d'un point d'image sont codés en un second mot qui est choisi dans le tableau respectif associé à la zone de luminance incluant la luminance dudit point d'image et qui est représentatif de la sous-zone dans la zone de luminance incluant les deux différences de couleur dudit point.

L'invention sera mieux comprise à la lecture de la description suivante de plusieurs modes de réalisation en référence aux dessins annexés correspondants dans lesquels:

- la Fig. 1 est un bloc-diagramme schématique d'un codeur selon une première réalisation du premier procédé;

- la Fig. 2 montre le domaine cubique trichromatique des points d'image dans le repère cartésien à trois coordonnées primaires R, V, ainsi que quatre plans à luminace constante;

- les Figs. 3 à 6 montrent les zones de variation des deux signaux de différence de couleur DR et DB pour quatre zones de luminance selon une seconde réalisation du premier procédé; et

- la Fig. 7 est un bloc-diagramme schématique d'un codeur selon la seconde réalisation du premier procédé.

Dans la suite, on se réfère à un signal vidéo composite en couleur, qui est composé d'un signal de luminance Y, d'un premier signal de différence de couleur DR et d'un second signal de différence de couleur DB. L'amplitude du signal de luminance est normalisée et varie entre 0 et 1. "0" correspond à une image noire et "1" correspond à une image blanche. L'amplitude du signal de luminance Y est donnée par la relation bien connue:

$$Y = L_R R + L_V V + L_B B$$

R, V et B sont les trois coordonnées primaires rouge, verte et bleue d'un point d'image dans un système cartésien trichromatique. $L_R$, $L_V$ et $L_B$ sont les coefficients de luminance dont la somme est égale à l'unite. Les valeurs approximatves des coefficients de luminance sont respectivement:

$$L_R = 0,3; L_V = 0,59; L_B = 0,11$$

Le changement des coordonnées R, V et B en les coordonnées Y, DR et DB est donné par les relations suivantes:

$$Y = 0,3 R + 0,59 V + 0,11 B \qquad (1)$$
$$DR = R - Y$$
$$DB = B - Y$$

Inversement, le changement de coordonnées Y, DR et DB en les coordonnées R, V et B est donné par les relations suivantes:

$$R = Y + DR$$
$$V = Y - (0,3 / 0,59) DR - (0,11 / 0,59) DB$$
$$B = Y + DB$$

Pour une image en noir et blanc, on a:

$$R = V = B = Y \qquad et \qquad DR = DB = 0$$

Dans la suite, un troisième signal de différence de couleur intervient également et est tel que $DV = V - Y$.

Il est supposé que les composantes primaires R, V et B sont sous la forme de signaux numériques et résultent de l'échantillonnage de composantes primaires analogiques fournies par une source vidéo en couleurs, telle qu'une caméra. Dans un but de simplification, on suppose qu'une quantification est effectuée suivant une échelle à 100 niveaux, entre 0 et 100, bien qu'en pratique, la quantification est effectuée suivant une échelle à 256 niveaux ce qui correspond à la représentation de chaque échantillon par un mot à 8 bits.

R, V et B variant entre 0 et 100 et donc Y variant entre 0 et 100 on en déduit les trois intervalles de variation de DR, DV et DB qui sont:

$$-70 \leqslant DR \leqslant 70$$
$$-41 \leqslant DV \leqslant 41 \tag{2}$$
$$-89 \leqslant DB \leqslant 89$$

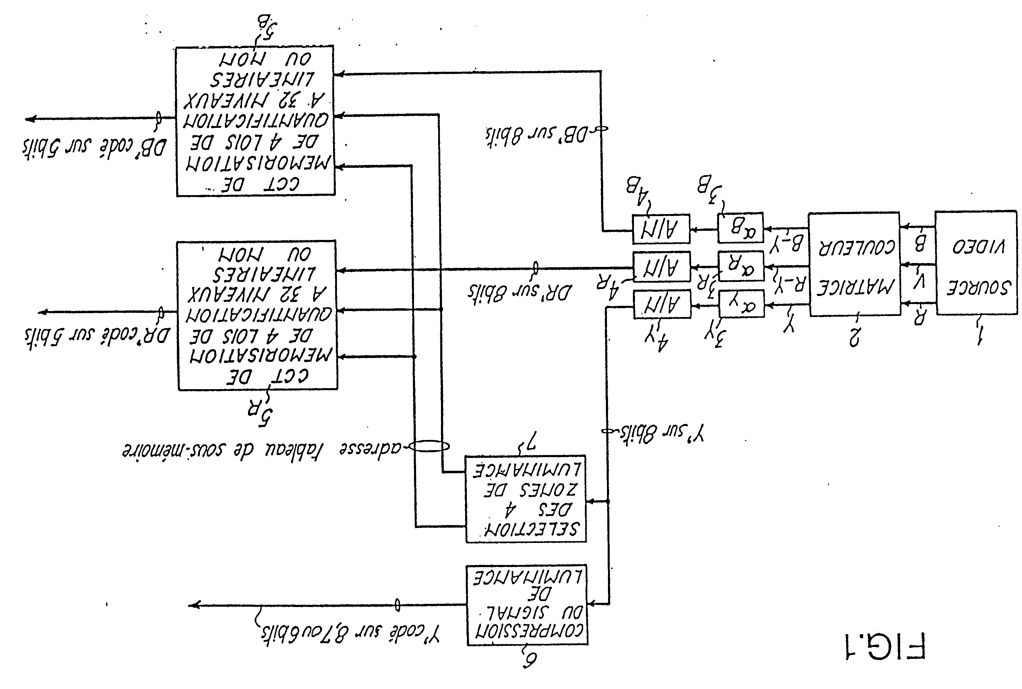

Cependant, en pratique, la conversion analogique-numérique est de préférence effectuée par des convertisseurs analogiques-numériques identiques sur les trois signaux composants, c'est-à-dire suivant un même échelle de quantification d'échantillonnage. Comme montré à la Fig. 1, dans le codeur, une matrice de couleur 2 reçoit les signaux analogiques R, V et B d'une source vidéo 1 et retransmet les signaux Y, DR et DB aux entrées de trois atténuateurs analogiques $3_Y$, $3_R$ et $3_B$. Les coefficients d'atténuation $\alpha_Y$, $\alpha_R$ et $\alpha_B$ des trois atténuateurs sont choisis de sorte que les amplitudes crête à crête des trois signaux Y', DR' et DB' sortant des atténuateurs soient égales à celle du signal de luminance Y. On obtient pour:

$$0 \leqslant Y' = Y \leqslant 100 \qquad \text{et } \alpha_{Y'} = 1$$

$DR' = (100 / 140) DR$ soit $\alpha_R = 0{,}71$      et $-50 \leqslant DR' \leqslant 50$;
$DV' = (100 / 82) DV$ soit $\alpha_V = 1{,}22$      et $-50 \leqslant DV' \leqslant 50$;
$DB' = (100 / 178) DB$ soit $\alpha_B = 0{,}56$      et $-50 \leqslant DB' \leqslant 50$

Les signaux analogiques Y', DR' et DB' variant dans des intervalles de même largeur sont ensuite convertis numériquement en premiers mots de 8 bits par trois convertisseurs analogiques-numériques $4_Y$, $4_R$ et $4_B$.

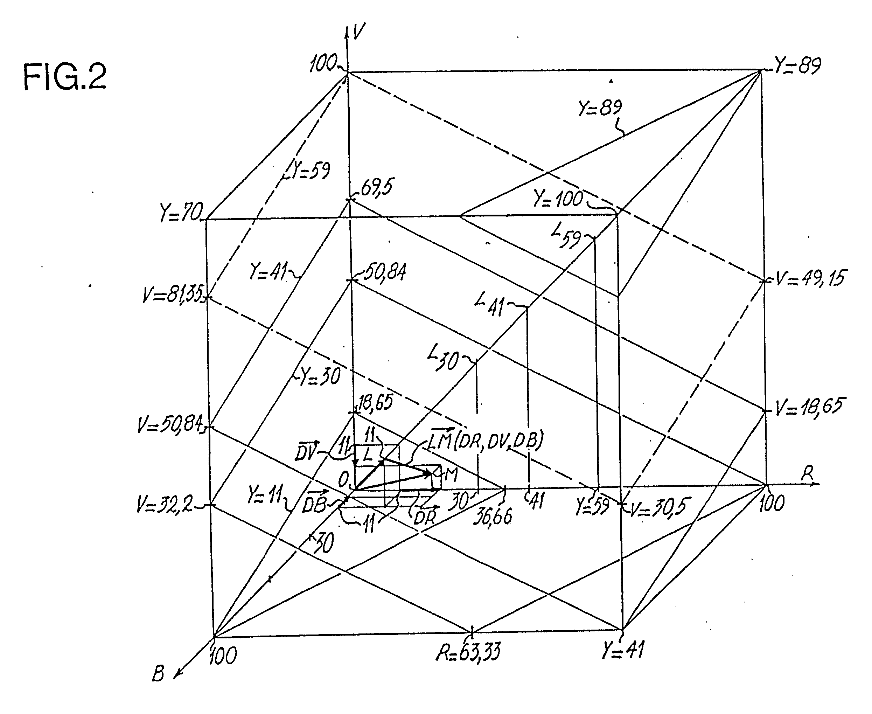

Dans le repère cartésien trichromatique R, V et B montré à la Fig. 2 est représenté un cube ayant un sommet confondu avec l'origine du repère, et trois faces confondues avec les trois plans principaux du repère. Le cube a des arêtes égales à 100 et délimite le domaine colorimétrique d'un point d'image de coordonnées R, V, B comprises entre 0 et 100. Quatre plans parallèles définis par la relation (1) dans lesquels les points d'image ont des luminances constantes respectives Y = 11, Y = 30, Y = 41 et Y = 59, sont également représentés dans la Fig. 2. Chacun de ces plans passe par l'un des sommets du cube. Le plan Y = 11 passe par le sommet ayant des coordonnées R = 0, V = 0 et B = 100 pour lequel le point d'image correspondant à sa couleur bleue saturée. Le plan Y = 30 passe par le sommet ayant des coordonnées R = 100, V = 0 et B = 0 pour lequel le point d'image correspondant a sa couleur rouge saturé. Le plan Y = 41 passe par sommet ayant des coordonnées R = 100, V = 0 et B = 100 pour lequel le point d'image correspondant a ses couleurs rouge et bleue saturées. Le plan Y = 59 passe par le sommet ayant des coordonnées R = 0, V = 100 et B = 0 pour lequel le point d'image correspondant a sa couleur verte saturée. Les intersections de ces plans avec des faces du cube délimitent ainsi quatre surfaces-quadrilatérales à l'intérieur du cube. Les coordonnées des sommets des surfaces quadrilatérales, c'est-à-dire des intersections ponctuelles des quatre plans à luminance constante avec des arêtes du cube, sont également indiquées dans la Fig. 2.

Dans la Fig. 2, $L_{11}$, $L_{30}$, $L_{41}$ et $L_{59}$ désignent des points aux intersections des plans Y = 11, Y = 30, Y = 41 et Y = 59 et de la diagonale du cube passant par l'origine 0. Les trois coordonnées primaires R, V et B des points $L_{11}$, $L_{30}$, $L_{41}$ et $L_{59}$ sont égales à 11, 30, 41 et 59. Pour chaque plan Y, tout point M appartenant à ce plan ayant des coordonnées R, V et B permet de définir un vecteur

$$\overrightarrow{LM}$$

dont les coordonnées sont les différences de couleur:

DR = R - Y, DV = V - Y et DB = B - Y. Par exemple, comme montré à la Fig. 1 relativement au plan Y = 11, les variations du vecteur

$$\overrightarrow{LM}$$

permettent de déterminer les intervalles de variation des signaux de différence de couleur DR, DV et DB pour $0 \leqslant Y \leqslant 11$ en tenant compte des intervalles selon les inégalités (2):

$$-11 = \sup (\inf (-11{,}0), -70) \leqslant DR \leqslant \inf (\sup ((36{,}6 - 11), 0), 70) = 25{,}6$$

$$-11 = \sup (\inf (-11{,}0), -41) \leqslant DV \leqslant \inf (\sup ((18{,}65 - 11), 0), 41) = 7{,}65$$

$$-11 = \sup (\inf (-11{,}0), -89) \leqslant DB \leqslant \inf (\sup ((100 - 11){,}0), 89) = 89.$$

où "inf" désigne le petit nombre et "sup" le plus grand nombre.

Ainsi, pour tous les points d'images dont la luminance est inferieure à 11, les signaux R, V et B ne prennent pas toutes les valeurs entre 0 et 100 et les signaux de différence de couleur DR et DB varient dans des intervalles dont les largeurs sont inférieures à celles des intervalles définies par les inégalités (2). Cette restriction des limites de variation permet ainsi de réduire le débit d'information à transmettre en fonction de la luminance du point.

Selon un premier procédé de codage, le nombre de bits alloués aux mots d'échantillon ou de point d'image transmis des signaux de différence de couleur DB et DR est constant et la loi de quantification linéaire ou non linéaire change en fonction de la luminance du point d'image à transmettre. Par exemple, si on choisit quatre zones de luminance délimitées par les trois plans à luminance constante $Y = 30$, $Y = 41$ et $Y = 59$, on trouve en référence à la Fig. 2 les intervalles de variation-respectifs suivants des signaux de différence de couleur DR, DV, DB et donc ceux des signaux de différence de couleur DR', DV' et DB' déduits par multiplication des coefficients $\alpha_R$, $\alpha_V$ et $\alpha_B$.

- pour $0 \leqslant Y \leqslant 30$

$-30 = \sup (\inf(-30,0), -70) \leqslant DR \leqslant \inf (\sup ((100-30), 0), 70) = 70$

$-30 = \sup (\inf (-30,0), -41) \leqslant DV \leqslant \inf (\sup((50,84-30), 0), 41) = 20,84$

$-30 = \sup (\inf (-30,0), -89) \leqslant DB \leqslant \inf (\sup ((100-30), (100-11)), 89) = 89$

soit:
- $22 \leqslant DR' \leqslant 50$
- $37 \leqslant DV' \leqslant 25$
- $17 \leqslant DB' \leqslant 50$

- pour $30 < Y \leqslant 41$

$-41 = \sup (\inf (-41, -30), -70) \leqslant DR < \inf (\sup ((100-41), (100-30)), 70) = 70$

$-41 = \sup (\inf (-41, -30), -41) \leqslant DV \leqslant \inf (\sup((69,5-41), (50,84-30)), 41) = 28,5$

$-41 = \sup (\inf (-41, -30), -89) \leqslant B < \inf (\sup ((100-41), (100-30)), 89) = 70$

soit:
- $30 \leqslant DR' < 50$
- $50 \leqslant DV' \leqslant 35$
- $23 \leqslant DB' < 40$

- pour $41 < Y \leqslant 59$

$-59 = \sup /(\inf (-59, -41), -70); \leqslant DR < \inf (\sup ((100-59), (100-41)), 70) = 59$

$-41 = \sup (\inf (-59, -41), -41) \leqslant DV \leqslant \inf (\sup ((100-59), (69,5-41)), 41) = 41$

$-59 = \sup (\inf (-59, -41), -89) \leqslant DB < \inf (\sup ((100-59), (100-41)), 89 = 59$

soit:
- $43 \leqslant DR' < 43$
- $50 \leqslant DV' \leqslant 50$
- $33 \leqslant DB \leqslant 33$

- pour $59 < Y \leqslant 100$

$-70 = \sup ((\inf (-59, -70), -70) < DR < \inf ((100-59), 70) = 41$

$-28,5 = \sup ((30,5-59), -41) < DV < \inf ((100-59), 41) = 41$

$-89 = \sup ((\inf (-89, -59), -89) < DB < \inf ((100-59), 89) = 41$

soit:
- $50 < DR' < 30$
- $35 < DV' < 50$
- $50 < DB' < 23$

Selon une première réalisation du premier procédé, chacun des signaux de différence de couleur codés sont

4

délivrés par le codeur sous la forme de seconds mots à 5 bits, commne montré à la Fig. 1. Ceci revient à coder le signal DR', DB' sortant du convertisseur analogique-numérique respectif $4_R$, $4_B$ en $2^5 = 32$ niveaux d'une loi de quantification choisie parmi quatre en fonction de la luminance Y du point d'image considéré. Chaque loi de quantification peut être linéaire ou non linéaire et correspond à l'une des quatre zones de luminance. Les numéros des 32 niveaux - ou sous-intervalles de variation - de chacune des quatre lois de quantification sont sous la forme de seconds mots à 5 bits. A chaque loi de quantification et donc à chaque zone de luminance est attibuée une sous-mémoire mémorisant un tableau de $2^8 = 256$ seconds mots afin qu'à chaque premier mot à 8 bits DR', DB' corresponde un second mot représentatif du niveau le plus voisin de la valeur de DR', DB'. Les quatre sous-mémoires sont incluses dans une mémoire programmable PROM ou REPROM d'un circuit de mémorisation $5_R$, $5_B$. A la sortie du convertisseur $4_Y$ est reliée l'entrée d'un second circuit de mémorisation 6 et l'entrée d'un circuit de sélection des quatre zones de luminance 7. Le circuit 6 contient la table de compression du signal Y' qui permet de faire correspondre à chaque mot entrant à 8 bits un mot sortant à 8, 7 ou 6 bits selon la loi de compression de luminance choisie.

Le circuit 7 détermine en fonction du premier mot à 8 bits de Y', la zone de luminance correspondante parmi quatre en vue d'adresser par un mot à deux bits dans chaque circuit $5_R$, $5_B$, l'une des quatre sous-mémoires qui correspond à la loi de quantification de DR', DB' pour la zone de luminance en question.

Selon une seconde réalisation du premier procédé, um second mot de 10 bits est alloué pour chaque paire de premiers mots à 8 bits DR' et DB' sortant des convertisseurs $4_R$ et $4_B$. En effet, les deux variables DR' et DB', ou DR et DB ne sont pas indépendantes.

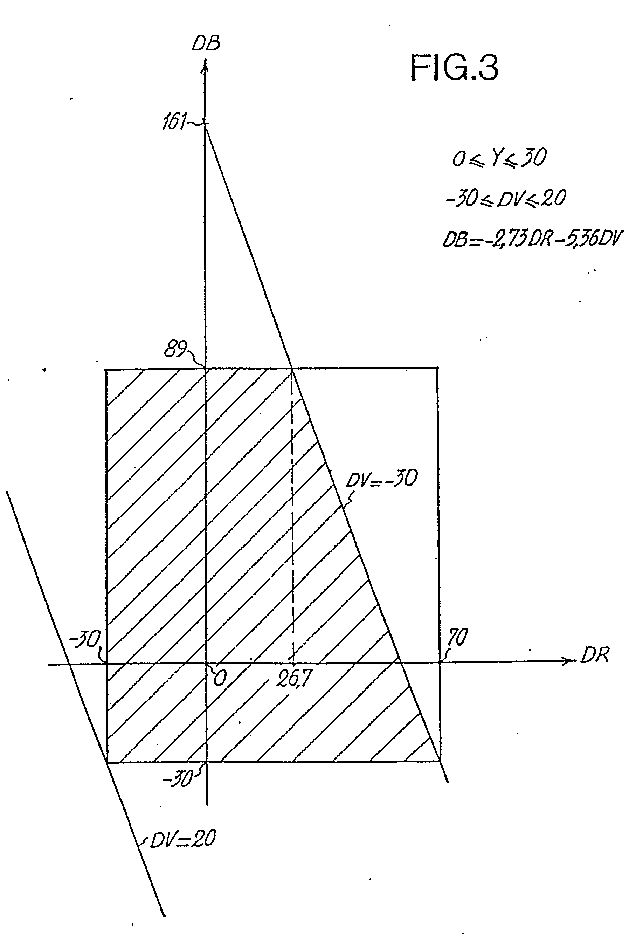

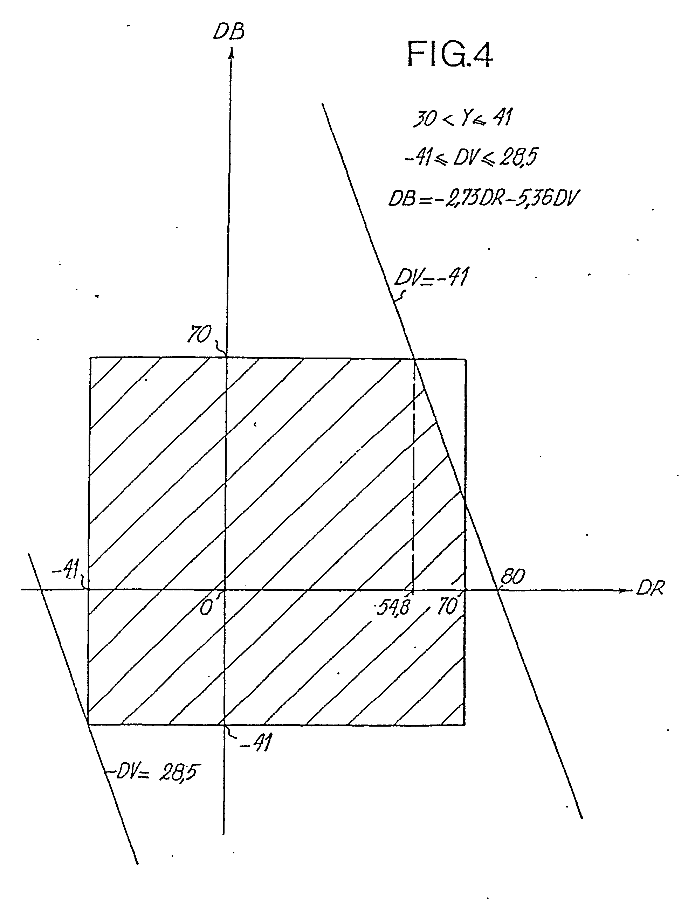

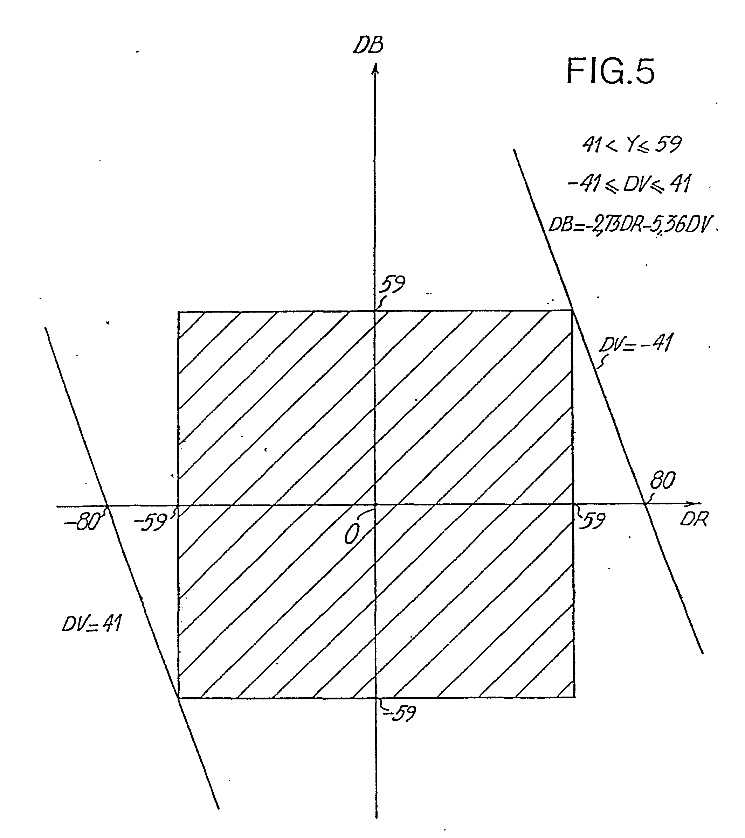

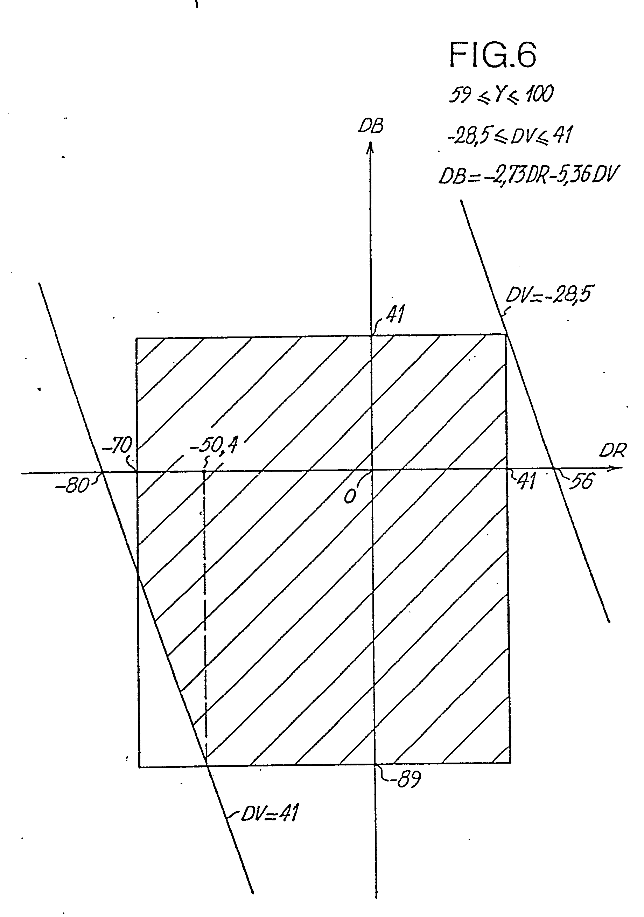

Dans les Figs. 3, 4, 5 et 6 sont représentés par des zones hachurées les domaines de variation de DB et DR pour chacune des quatre zones de luminance. Ces domaines de variation sont obtenus en traçant les droites d'équation DB = -2,73 DR - 5,36 DV pour DV égale à des constantes comprises entre les limites respectives. Cette dernière équation est obtenue à partir de la relation (1) comme suit:

$$Y = 0,3 \, R + 0,5 \, V + 0,11 \, B$$
$$\text{ou} \quad 0 = 0,3 \, (R\text{-}Y) + 0,59 \, (V\text{-}Y) + 0,11 \, (B\text{-}Y)$$
$$\text{ou} \quad DB = -(0,3/0,11) \, DR - (0,59/0,11) \, DV$$

Pour les première, seconde et quatrième zones de luminance, comme montré aux Figs. 3, 4 et 6, on constate que les variables DB et DR ne sont pas totalement indépendantes.

Au lieu de quantifier la totalité des intervalles de variation de DR et DB selon la première réalisatiom, seulement les zones hachurées, dans les Figs. 3 à 6 sont quantifiees en $2^{10} = 1024$ sous-zones repérées par des numéros sous forme de mots à 10 bits.

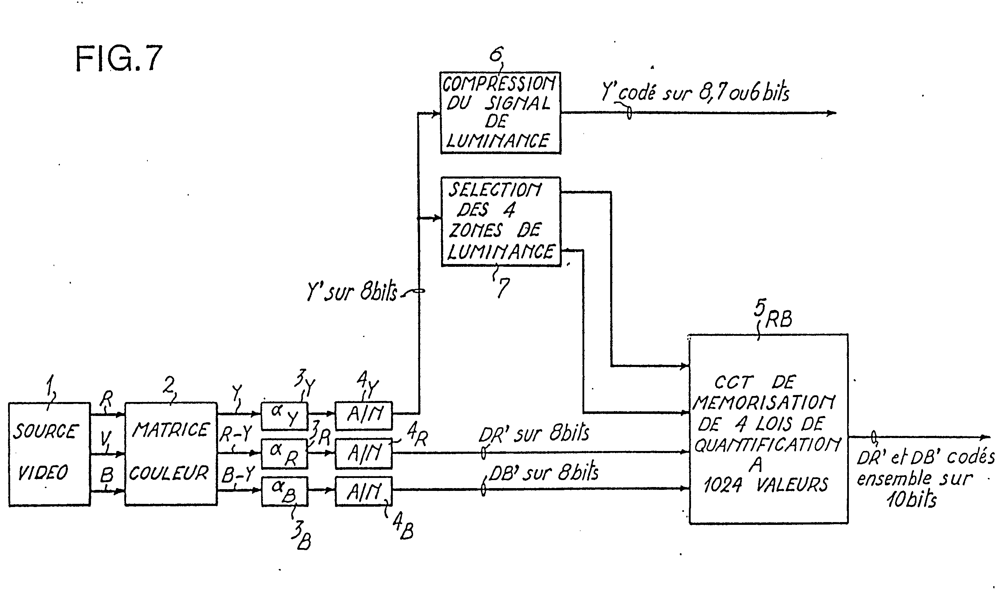

Le codeur selon la seconde réalisation montré à la Fig. 7 est analogue à celui montré à la Fig. 1, à l'exception que les deux circuits de mémorisation $5_R$ et $5_B$ sont remplacés par un unique circuit de mémorisation $5_{RB}$. Le circuit $5_{RB}$ contient quatre sous-mémoires PROM et REPROM assignées chacune à une zone de luminance et ayant chacune $2^8 \times 2^8$ mots de 10 bits choisis chacun parmi les 1024 mots représentatifs des numéros des sous-zones de la zone de luminance. A tous les points d'image Y' DR' DB' appartenant à une même sous-zone correspond un même mot à 10 bits. Les 1024 mots différents d'une sous-mémoire correspondent à 1024 couleurs ou sous-zones de la zone hachurée de la Fig. 3 à 6 correspondante. En d'autres termes, à chaque paire de deux mots entrants DR' et DB' à 8 bits représentatifs d'un point dont la couleur est comprise dans une sous-zone hachurée est attribuée une couleur parmi 1024 codée en un mot sortant à 10 bits. Ainsi, selon le second mode de réalisation du premier procédé, on dispose donc de points plus nombreux pour transmettre la même information, comparativement au premier mode de réalisation qui revenait à choisir 1024 points dans les zones rectangulaires des Figs. 3 à 6 déterminées par les limites de DB et DR. La qualité de la transmission est ainsi améliorée.

Selon un second procédé de codage, dans chaque zone de luminance, le nombre de bits alloués aux mots d'échantillon ou de point d'image transmis des signaux de différence de couleur DR et DB (ou DB' et DR') est variable en fonction de la luminance du point d'image, et la loi de quantification linéaire ou non linéaire est constante et indépendante de la luminance dans la zone. Un codeur selon ce second procédé a une organisation analogue à celle montrée à la Fig. 1. Les circuits de mémorisation assignés aux signaux DR' et DB' comprennent également chacun quatre sous-mémoires correspondant aux quatre zones de luminance. Par exemple, lorsque la largeur des, intervalles de variation de DR et DB est petite par exemple inférieure à 70, DR' et DB' sont codés en mots sortants à 4 bits, et lorsque la largeur des intervalles de variation de DR et DB est grande et supérieure à 70, DR' et DB' sont codés en mots sortants à 5 bits. Les signaux sortants ont un débit variable et sont transmis tels quels par paquet si le réseau de transmission est à débit variable et en mode-paquet, ou sont transmis à travers une mémoire tampon qui adapte le débit variable au débit constant du réseau dans le cas contraire.

Bien que l'invention a été décrie en se référant à des signaux numériques Y, DR et DB (ou Y', DR' et DB') ayant des premiers mots avec un même nombre de bits, le procédé selon l'invention est également applicable à tout ensemble de signaux numériques issus d'un signal vidéo composite et ayant des mots à nombre de bits différents. En effet, la proportion de la couleur bleue dans le signal de luminance étant plus faible que celle de la couleur rouge, les mots du signal DB peuvent avoir moins de bits que ceux du signal DR, par exemple

0 122 837

respectivement six et huit bits. Par ailleurs, le procédé de l'invention s'applique à toute autre combinaison des signaux Y, DR et DB différente de celle définie ci-dessus relative au standard SECAM. Une autre combinaison est celle relative au standard NTSC qui est constituée par le signal de luminance Y et les signaux de chrominance $E_Q$ et $E_I$ donnés par les relations suivantes:

$$E_Q = 0,48\,DR + 0,41\,DB$$
$$E_I = 0,74\,DR - 0,27\,DB$$

De nouvelles zones de luminance et donc de nouveaux intervalles et zones de variation des signaux de différence de couleur ou dits également de chrominance sont alors à définir dans le répére trichromatique.

**Revendications**

1. Procédé de codage d'un signal numérique de luminance (Y) et de deux signaux numériques de différence de couleur (DR; DB) ayant des débits élevés et constitués de premiers mots représentatifs de points d'une image en couleur, en des signaux numériques codés de luminance et de différence de couleur ayant des débits faibles et constitués de seconds mots, caractérisé en ce que l'amplitude crête à crête de la luminance (Y) est partagée en zones de luminance

$$(0 \leqslant Y \leqslant 30; 30 < Y \leqslant 41; 41 < Y \leqslant 59; 59 < Y \leqslant 100)$$

qui sont chacune associée à deux tableaux ($5_R$; $5_B$) de seconds mots de deux signaux codés respectivement représentatifs de sous-intervalles de variation (niveaux) prédéterminés des deux différences de couleur (DR; DB) pour des luminances comprises dams ladite zone de luminance, et en ce que les premiers mots des deux signaux de différence de couleur (DR; DB) représentatifs d'un point d'image sont codés en deux seconds mots qui sont choisis dans les deux tableaux respectifs ($5_R$; $5_B$) associés à la zone de luminance incluant la luminance dudit point d'image et qui sont représentatifs des deux sous-intervalles dans la zone de luminance incluant respectivement les deux différences de couleur dudit point.

2. Procédé conforme à la revendication 1, caractérisé en ce que le nombre de bits dans les seconds mots est constant et en ce que les seconds mots dans chaque tableau ($5_R$; $5_B$) sont représentatifs de sous-intervalles (niveaux) choisis suivant une loi de quantification de l'intervalle total de variation du signal de différence de couleur respectif (DR; DB) pour la zone de luminance associée.

3. Procédé conforme à la revendication 2, caractérisé en ce que les limites des intervalles de variation des deux signaux de différence de couleur (DR; DB) sont interdépendants des limites de variation d'un troisième signal de différence de couleur (DV) pour la zone de luminance associée.

4. Procédé conforme à la revendication 1, caractérisé en ce que les seconds mots de chaque différence de couleur sont représentatifs de sous-intervalles (niveaux) suivant une loi de quantification constante du signal de différence de couleur associé (DR; DB) et en ce que le nombre de bits dans les seconds mots de chaque tableau est fonction de la largeur de l'intervalle de variation du signal de différence de couleur pour la zone de luminance associée.

5. Procédé de codage d'un signal numérique de luminance (Y) et de deux signaux numériques de différence de couleur (DR; DB) ayant des débits élevés et constitués de premiers mots représentatifs des points d'une image en couleur, en des signaux numériques codés de luminance et de différence de couleur ayant des débits faibles et constitués de seconds mots, caractérisé en ce que l'amplitude crête à crête de la luminance (Y) est partagée en zones de luminance

$$(0 \leqslant Y \leqslant 30; 30 < Y \leqslant 41; 41 < Y \leqslant 59; 59 < Y \leqslant 100)$$

qui sont chacune associée à un tableau ($5_{RB}$) de seconds mots d'un signal codé représentatifs de sous-zones de variation prédéterminées des deux différences de couleur pour des luminances comprises dans ladite zone de luminance, et en ce que les deux premiers mots des deux signaux de différence de couleur (DR; DB) représentatifs d'un point d'image sont codés en un second mot qui est choisi dans le tableau respectif ($5_{RB}$) associé à la zone de luminance incluant la luminance dudit point d'image et qui est représentatif de la sous-zone dans la zone de luminance incluant les deux différences de couleur dudit point.

6. Procédé conforme à la revendication 5, caractérisé en ce que le nombre de bits dans les seconds mots est constant et en ce que les seconds mots dans chaque tableau ($5_{RB}$) sont représentatifs de sous-zones choisies suivant une loi de quantification de la zone totale de variation des deux signaux de différence de couleur (DR; DB) pour la zone de luminance associée.

7. Procédé conforme à la revendication 6, caractérisé en ce que les limites des zones de variation des deux signaux de différence de couleur (DR; DB) sont dépendants des limites de variation d'un troisième signal de différence de couleur (DV) pour la zone de luminance associée.

8. Procédé conforme à la revendication 5, caractérisé en ce que les seconds mots des différences de couleur sont représentatifs de sous-zones suivant une loi de quantification constante des deux signaux de différence

6

**0 122 837**

de couleur et en ce que le nombre de bits dans les seconds mots de chaque tableau est fonction de l'étendue de la zone de variation des signaux de différence de couleur pour la zone de luminance associée.

9. Procédé conforme à l'une quelconque des revendications 1 à 8, caractérisé en ce qu'avant codage, les signaux de différence de couleur (DR'; DB') sont corrigés afin que leur amplitude crête à crête soit égale à celle du signal de luminance (Y).


**Patentansprüche**

1. Verfahren zum Codieren eines digitalen Bildleuchtdichtensignals (Y) sowie zweier digitaler Farbdifferenzsignale (DR, DB), welche erhöhte Dichte haben und von ersten, Farbbildpunkte repräsentierenden Wörtern gebildet sind, in kodierte digitale Bildleuchtdichten- und Farbdifferenzsignale, welche geringe Dichte haben und von zweiten Wörtern gebildet sind, dadurch gekennzeichnet, daß die von Spitze zu Spitze genommene Amplitude der Bildleuchtdichte (Y) in Zonen der Bildleuchtdichte $(0 \leqslant Y \leqslant 30; 30 < Y \leqslant 41; 41 < Y \leqslant 59; 59 < Y \leqslant 100)$ unterteilt wird, von denen jede zwei Verzeichnissen $(5_R; 5_B)$ von zweiten Wörtern aus zwei codierten Signalen zugeordnet ist, die jeweils vorbestimmte Unterintervalle (Niveaus) der Variation der beiden Farbdifferenzen (DR, DB) für die in der zugehörigen Bildleuchtdichtenzone enthaltenen Bildleuchtdichten repräsentieren, und daß die ersten Wörter aus zwei, einen Bildpunkt repräsentierenden Farbdifferenzsignalen (DR, DB) in zwei zweite Wörter codiert werden, die aus den beiden jeweiligen Verzeichnissen $(5_R, 5_B)$ ausgewählt werden, die der die Bildleuchtdichte des Bildpunktes enthaltenden Bildleuchtdichtenzone zugeordnet sind und die die beiden Unterintervalle in der die beiden Farbdifferenzen des Bildpunktes jeweils enthaltenden Bildleuchtdichtenzone repräsentieren.

2. Verfahren nach Anspruch 1, dadurch gekennzeichnet, daß die Anzahl der Bits in den zweiten Wörtern konstant ist, und daß die zweiten Wörter in jedem Verzeichnis $(5_R; 5_B)$ Unterintervalle (Niveaus) repräsentieren, welche nach einem Quantifizierungsgesetz des Gesamtintervalls der Variation des jeweiligen, Farbdifferenzsignals (DR, DB) für die zugehörige Bildleuchtdichtenzone ausgewählt werden.

3. Verfahren nach Anspruch 2, dadurch gekennzeichnet, daß die Grenzen der Intervalle der Variation der beiden Farbdifferenzsignale (DR, DB) in Wechselbeziehung stehen mit den Variationsgrenzen eines dritten Farbdifferenzsignals (DV) für die zugehörige Bildleuchtdichtenzone.

4. Verfahren nach Anspruch 1, dadurch gekennzeichnet, daß die zweiten Wörter jeder Farbdifferenz die Unterintervalle (Niveaus) nach einem konstanten Quantifizierungsgesetz des zugehörigen Farbdifferenzsignals (DR; DB) repräsentieren und daß die Bitzahl in den zweiten Wörtern jedes Verzeichnisses eine Funktion der Variationsintervallbreite des Farbdifferenzsignals für die zugehörige Bildleuchtdichtenzone ist.

5. Verfahren zum Codieren eines digitalen Bildleuchtdichtensignals (Y) sowie zweier digitaler Farbdifferenzsignals (DR; DB), welchs erhöhte Dichte haben und von ersten, Farbbildpunkte repräsentierenden Wörtern gebildet sind, in codierte Digitalsignale der Bildleuchtdichte und der Farbdifferenz mit geringer Dichte, welche von zweiten Wörtern gebildet sind, dadurch gekennzeichnet, daß die von Spitze zu Spitze genommene Amplitude der Bildleuchtdichte (Y) in Bildleuchtdichtenzonen $(0 \leqslant Y \leqslant 30; 30 < Y \leqslant 41; 41 < Y \leqslant 59; 59 < Y \leqslant 199)$ unterteilt wird, von denen jede einem Verzeichnis $(5_{RB})$ aus zweiten Wörtern eines codierten Signals zugeordnet ist, die vorbestimmte Unterzonen der Variation der beiden Farbdifferenzen für Bildleuchtdichten, die in der zugehörigen Bildleuchtdichtenzone enthalten sind, repräsentieren, und daß die beiden ersten Wörter der beiden ersten Farbdifferenzsignale (DR; DB), welche einen Bildpunkt repräsentieren, in ein zweites Wort codiert werden das aus dem jeweiligen einer die Bildleuchtdichte des Bildfpunktes anthaltenden Bildleuchtdichtenzone repräsentierenden Verzeichnis $(5_{RB})$ gewählt wird, und das die Unterzone der die beiden Farbdifferenzen des Bildpunktes enthaltenden Bildleuchtdichtenzone repräsentiert.

6. Verfahren nach Anspruch 5, dadurch gekennzeichnet, daß die Anzahl der Bits in den zweiten Wörtern konstant ist, und daß die zweiten Wörter in jeden Verzeichnis $(5_{RB})$ Unterzonen repräsentieren, die nach einen Quantifizierungsgesetz der Gesamtzone der Variation der beiden Farbdifferenzsignal (DR; DB) für die zugehörige Bildleuchtdichtenzone gewählt werden.

7. Verfahren nach Anspruch 6, dadurch gekennzeichnet, daß die Variationsgrenzen der Zonen der beiden Farbdifferenzsignale (DR; DB) von den Variationsgrenzen eines dritten Farbdifferenzsignals (DV) für die zugehörige Bildleuchtdichtenzone abhängen.

8. Verfahren nach Anspruch 5, dadurch gekennzeichnet, daß die zweiten Farbdifferenzwörter Unterzonen nach einen konstanten Quantifizierungsgesetz der beiden Farbdifferenzsignale repräsentieren und daß die Anzahl der Bits in den zweiten Wörtern jedes Verzeichnisses eine Funktion der Ausdehnung der Variationszone der Farbdifferenzsignale für die zugehörige Bildleuchtdichtenzone sind.

9. Verfahren nach einen der Ansprüche 1 bis 8, dadurch gekennzeichnet, daß vor der Codierung die Farbdifferenzsignale (DR'; DB') derart korrigiert werden, daß ihre von Spitze zu Spitze genommene Amplitude gleich derjenigen des Bildleuchtdichtensignals (Y) ist.

**Claims**

1. Method for encoding a digital luminance signal (Y) and two digital colour difference signals (DR; DB) having high bit-rates and composed of first words representing colour picture elements, into encoded digital luminance and colour difference signals having low bit-rates and composed of second words, characterized in that the peak-to-peak amplitude of the luminance (Y) is split into luminance regions ($0 \leq Y \leq 30$; $30 < Y \leq 41$; $41 < Y \leq 59$; $59 < Y \leq 100$) that are each associated with two tables ($5_R$; $5_B$) of second words of two encoded signals respectively representative of predetermined variation sub-intervals (levels) in the two colour differences (DR; DB) for luminances lying within said luminance region, and in that the first words of the two colour difference signals (DR; DB) representing a picture element are encoded into two second words that are selected from the two respective tables ($5_R$; $5_B$) associated with the luminance region including the luminance of said picture element and that are representative of the two sub-intervals in the luminance region respectively including the two colour differences of said element.

2. Method according to claim 1, characterized in that the number of bits in the second words is constant and in that the second words in each table ($5_R$; $5_B$) are representative of sub-intervals (levels) chosen in accordance with a quantification law of the full variation interval of the respective colour difference signal (DR; DB) for the associated luminance region.

3. Method according to claim 2, characterized in that the limits of the variation intervals in the two colour difference signals (DR; DB) are interdependent on variation limits of a third colour difference signal (DV) for the associated luminance region.

4. Method according to claim 1, characterized in that the second words for each colour difference represent sub-intervals (levels) in a constant quantification law for the associated colour difference signal (DR; DB) and in that the number of bits in the second words of each table is a function of the width of the variation interval of the colour difference signal for the associated luminance region.

5. Method for encoding a digital luminance signal (Y) and two digital colour difference signals (DR; DB) having high bit-rates and composed of first words representing colour picture elements, into encoded digital luminance and colour difference signals having low bit-rates and composed of second words, characterized in that the peak-to-peak amplitude of the luminance (Y) is split into luminance regions ($0 \leq Y \leq 30$; $30 < Y \leq 41$; $41 < Y \leq 59$; $59 < Y \leq 100$) that are each associated with a table ($5_{RB}$) of second words of an encoded signal representative of predetermined variation sub-regions in the two colour differences for luminances lying within said luminance region, and in that the first two words of the two colour difference signals (DR; DB) representing a picture element are encoded into a second word that is selected from the respective table ($5_{RB}$) associated with the luminance region including the luminance of said picture element and that is representative of the sub-region in the luminance region including the two colour differences of said element.

6. Method according to claim 5, characterized in that the number of bits in the second words is constant and in that the second words in each table ($5_{RB}$) are representative of sub-regions chosen in accordance with a quantification low of the full variation region of the two respective colour difference signal (DR; DB) for the associated luminance region.

7. Method according to claim 6, characterized in that the limits of the variation regions in the two colour difference signals (DR; DB) are dependent on variation limits of a third colour difference signal (DV) for the associated luminance region.

8. Method according to claim 5, characterized in that the second words of the colour differences represent sub-regions in a constant quantification law for the two colour difference signals, and in that the number of bits in the second words of each table is a function of the extent of the variation region of the colour difference signals for the associated luminance region.

9. Method according to one of claims 1 to 8, characterized in that prior to encoding, the colour difference signals (DR'; DB') are corrected in order to have their peak-to-peak amplitude equal to that of the luminance signal (Y).

FIG.1

**6** — COMPRESSION DU SIGNAL DE LUMINANCE → Y'codé sur 8,7 ou 6 bits

**7** — SELECTION DES 4 ZONES DE LUMINANCE

adresse tableau de sous-mémoire

Y' sur 8 bits

**1** SOURCE VIDEO

**2** MATRICE COULEUR

$\alpha_Y$ (**3Y**) → A/N (**4Y**)

$\alpha_R$ (**3R**) → A/N (**4R**)

$\alpha_B$ (**3B**) → A/N (**4B**)

DR' sur 8 bits

DB' sur 8 bits

**5R** CCT DE MEMORISATION DE 4 LOIS DE QUANTIFICATION A 32 NIVEAUX LINEAIRES OU NON → DR'codé sur 5 bits

**5B** CCT DE MEMORISATION DE 4 LOIS DE QUANTIFICATION A 32 NIVEAUX LINEAIRES OU NON → DB'codé sur 5 bits

R, V, B

Y, R-Y, B-Y

0 122 837

FIG.2

# FIG.3

$$0 \leqslant Y \leqslant 30$$

$$-30 \leqslant DV \leqslant 20$$

$$DB = -2,73\,DR - 5,36\,DV$$

FIG.4

$30 < Y \leqslant 41$

$-41 \leqslant DV \leqslant 28,5$

$DB = -2,73DR - 5,36DV$

FIG.5

$41 < Y \leqslant 59$

$-41 \leqslant DV \leqslant 41$

$DB = -2,73DR - 5,36DV$

FIG.6

$59 \leqslant Y \leqslant 100$

$-28,5 \leqslant DV \leqslant 41$

$DB = -2,73DR - 5,36DV$

FIG.7

SOURCE VIDEO (1)

MATRICE COULEUR (2)

$\alpha_Y$ (3Y) — A/N (4Y)

$\alpha_R$ (3R) — A/N (4R)

$\alpha_B$ (3B) — A/N (4B)

R, V, B

Y, R-Y, B-Y

COMPRESSION DU SIGNAL DE LUMINANCE (6)

Y' codé sur 8,7 ou 6 bits

SELECTION DES 4 ZONES DE LUMINANCE (7)

Y' sur 8 bits

CCT DE MEMORISATION DE 4 LOIS DE QUANTIFICATION A 1024 VALEURS (5 RB)

DR' sur 8 bits

DB' sur 8 bits

DR' et DB' codés ensemble sur 10 bits

0 122 837